# EUROPEAN PATENT APPLICATION

(11) **EP 2 495 140 A1**
(43) Date of publication of application: **05.09.2012**
(21) Application number: 11156430.8
(22) Date of filing: 01.03.2011
(51) Int. Cl.: B60R 21/38, F16F 7/00

(54) **Hood hinge assembly for a motor vehicle**

(71) Applicant: SAAB AUTOMOBILE AB, 461 80 Trollhättan (SE)
(72) Inventor: Karlsson, Mikael, 467 94, GRÄSTORP (SE)
(74) Representative: Fritsche, Daniel

(57) **Abstract**

A vehicle hood hinge assembly (100), comprising: a hinge linkage mechanism adapted to fasten a hood (104) of a vehicle (102) to a body of a vehicle (102) while permitting movement of the hood (104) in a first direction between an open and a closed position as seen in relation to the body of the vehicle, the vehicle hood hinge assembly further comprising: a link element (220) adapted to be arranged between the hood (104) and the hinge linkage mechanism; and a damping element (222) arranged between the hinge linkage mechanism and the link element (220), said damping element (222) being configured to maintain the link element (220) in a fixed position in relation to the hinge linkage mechanism during normal operation of the hood (104), and further configured to permit movement of the hood (104) in a second direction in the case of a collision with a pedestrian or similar object detected by a sensor system, wherein said movement in the second direction is limited by said damping element (222).

## Description

### Field of the Invention

The present invention relates to a hood hinge assembly for a motor vehicle. It also relates to a vehicle comprising a hood hinge assembly.

### Technical Background

Increased safety awareness in a traffic environment has led to new requirements concerning the safety of a pedestrian involved in a collision with a motor vehicle. In particular, in the case of a collision between a pedestrian and a motor vehicle it is preferable that the hood is lifted a set distance so as to provide a softer impact compared to the stiff engine located underneath the hood. Additionally, the lifting of the hood should be fast in order to complete the hood motion prior to pedestrian impact on the top of the hood. Rapid lifting of the hood can be achieved in a number of ways. One example is to use a pyrotechnic charge to provide a rapid movement. However, such rapid deployment may be damaging to the hood hinge mechanism and to the hood itself as the hood reaches its maximum travel height at a high velocity. Deployment may thus result in costly and complicated repairs even if the hood is lifted without any secondary damage caused by direct impact on the hood by a pedestrian or by other external objects. This is commonly called a "non pedestrian activation" or "false activation". If there is a second impact by pedestrian or other external objects, the hood and hinge may still be damaged.

US7712569 discloses a device for raising the hood during a collision with a pedestrian. In US7712569, the entire hood hinge mechanism is released from the body of the car by means of a pyrotechnic unit acting on a lift cylinder, thereby lifting the hinge mechanism and the hood. However, after the hood has been lifted, only a lift limiter prevents the hood and hood mechanism from releasing completely. Furthermore, replacing a mechanism according to US7712569 would require replacing at least the lift limiter, a retaining member and a pyrotechnic unit.

Therefore, there is a need for an improved hood hinge assembly for which the safety for the pedestrian is at least remained while reducing replacement cost and complexity in the case of a collision.

### Summary of the Invention

In view of the above-mentioned and other drawbacks of the prior art, it is an object of the present invention to provide an improved hood hinge assembly.

According to a first aspect of the present invention, it is therefore provided a vehicle hood hinge assembly, comprising: a hinge linkage mechanism adapted to fasten a hood of a vehicle to a body of a vehicle while permitting movement of the hood in a first direction between an open and a closed position as seen in relation to the body of the vehicle, the hood hinge assembly further comprising: a link element arranged between the hood and the hinge linkage mechanism; and a damping element arranged between the hinge linkage mechanism and a link element, the damping element being configured to maintain the link element in a fixed position in relation to the hinge linkage mechanism during normal operation of the hood, and further configured to permit movement of the hood in a second direction in the case of a collision with a pedestrian or similar object detected by a sensor system, wherein the movement in the second direction is limited by said damping element.

A first direction should in the present context be understood as the rotational direction in which a hood of a vehicle is opened in a normal operating mode, such as when the opening gap is facing the forward direction (front) of the vehicle.

Analogously, a second direction should in the present context be understood as the rotational direction a hood of a vehicle is opened in case of a collision with a pedestrian or any similar object detected by the sensor system, such as when the opening gap is facing the rearward direction (rear) of the vehicle.

A hinge linkage mechanism may in the present context be any kind of hinge or similar arrangement facilitating opening of the hood of a vehicle in a normal mode of operation. A hinge should further be understood as any joint permitting movement between two linked elements, such as a pivot or a rotary joint.

In the present context, the intermediately arranged link element enables opening of the hood in the second direction, whereas a hinge linkage mechanism connected directly to the hood would only allow opening of the hood in the first direction. However, the link element may equally well be integrated in the hood as long as it is connected to the damping element so as to limit the opening distance of the hood.

The present invention is based on the realization that a damping mechanism for a hood hinge assembly advantageously can be configured in such a way as to limit the number of parts that need to be replaced in case of an activation of the damping mechanism without damage to the hood caused by secondary impact. The damping element limits the opening distance of the hood as well as the opening velocity when reaching the end position. Thus, by using a hood hinge assembly according to the present invention the risks of damaging the hood hinge and the hood in case of a collision are reduced, thereby decreasing the cost and complexity of repairing the car. A further advantage is that the damping element also functions as an additional securing element preventing the hood from intruding into the windscreen in case of a frontal impact after deployment. Another advantage of the damping element is that it reduces oscillations in the hood caused by the rapid lifting prior to head impact thereby preventing larger variation in head injury criteria (HIC) damage values at head during impact at different timings from triggering the lifting of the hood. The damping element may also be configured so that it in an extended position absorbs part of the energy from a head impact on the hood in the case of a pedestrian collision.

According to one embodiment, the link element may advantageously be hingely connected to the hinge linkage mechanism. By using a hinge to connect the link element to the hinge mechanism the hood is stabilized and the hinge also provides additional safety in that it further secures the hood, thereby preventing the hood from coming off in case of a collision.

In one embodiment, the vehicle hood hinge assembly may further comprise a holding element operative to prevent the link element from moving relative the hinge linkage mechanism during normal operation such as opening and closing of the hood. The holding element, or locking element, may be a spring element or a brake element such as a pop rivet, a clip or a shear pin.

In one embodiment, the hinge linkage mechanism may advantageously comprise at least two elongate levers, wherein each lever is adapted to be in a first end operatively and hingely connected to the body of a vehicle and wherein a second end of each lever is hingely connected to a holding arm which in turn is hingely connected to the link element.

In one embodiment, the link element may be hingely connected to an end portion of the holding arm arranged to face the forward direction of the vehicle.

According to one embodiment, the damping element may be arranged between the link element and the holding arm.

In one embodiment, the damping element may advantageously be a metal profile. By using a metal profile, such as a band, it is possible to easily design and tune the damping behavior and performance of the profile by altering thickness, width, length, material properties and shape until the desired stopping and damping properties are achieved.

In one embodiment, the metal profile may be a folded band. A folded metal band is advantageously used as it can be made relatively small thereby facilitating fitting of the element in the hinge assemble. Additionally, by adapting the folding, different opening heights and damping characteristics can easily be achieved.

According to one embodiment, the folded metal band may be at least partly meandering. However, the folded metal band may equally well have any combination of bends and S-shapes required in order to achieve the desirable characteristics.

In one embodiment, the damping element may be a spring. A tension helical spring may be used as the damping element, preferably a rigid or semi-rigid spring.

According to one embodiment, the vehicle hood hinge assembly may further comprise a pyrotechnic unit connected to a piston configured to open the hood in the second direction in case of a collision. In case of a collision, the pyrotechnic unit is triggered by an electronic pedestrian sensor system and a piston or a similar device is lifted as a result of the propulsive gas released by the pyrotechnic unit. The piston may advantageously act on the link element to provide an upwards movement lifting the hood. The velocity and extension of the movement is reduced as the link element is connected to the damping element, thereby transferring the upward force applied on the link element to the damping element. A set amount of force is required to act on the damping element in order to extend the damping element from a first idle position to a second end position where the movement of the hood is stopped. The piston may however equally well be replaced by any other lifting device capable of performing the lifting motion such as an airbag-type lifter. In the case of a collision, the link element may be lifted by first shearing or tearing of the holding element at a predetermined load from a lifting device.

According to one embodiment, the vehicle hood hinge assembly may further comprise a collision sensor for triggering said pyrotechnic unit. The collision sensor may be an accelerometer or any similar sensor able to detect a collision between a vehicle and an object. Most preferable, the sensor is configured to detect a collision between a vehicle and a pedestrian.

According to one embodiment of the invention, it is provided motor vehicle comprising a hood hinge assembly.

### Brief Description of the Drawings

These and other aspects of the present invention will now be described in more detail with reference to the appended drawings showing currently preferred embodiments of the invention, wherein:
Fig. 1 schematically illustrates a vehicle hood hinge assembly according to an embodiment of the present invention in a vehicle with a closed hood;
Fig. 2 schematically illustrates a vehicle hood hinge assembly according to an embodiment of the present invention in a vehicle with an open hood in a normal mode of operation;
Figs.3a and 3b schematically illustrates a vehicle hood hinge assembly according to an embodiment of the present invention in a vehicle with a hood opened as a result of a collision.
Figs. 4a and 4b schematically illustrate exemplary embodiments of a hinge linkage mechanism for use in embodiments of the present invention.

### Detailed Description of Preferred Embodiments of the Invention

In the present detailed description, various embodiments of a hood hinge assembly for a vehicle according to the present invention are mainly discussed with reference to a hood hinge assembly comprising a damping element.

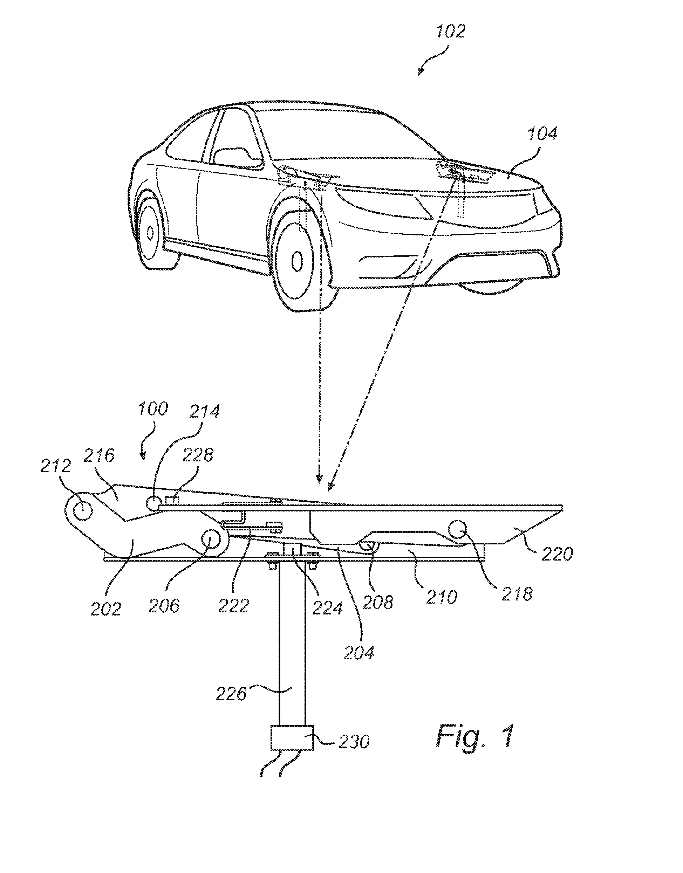

Fig. 1 schematically illustrates a preferred position of the hood hinge assembly 100 in a vehicle 102 where the hood 104 of the vehicle is closed.

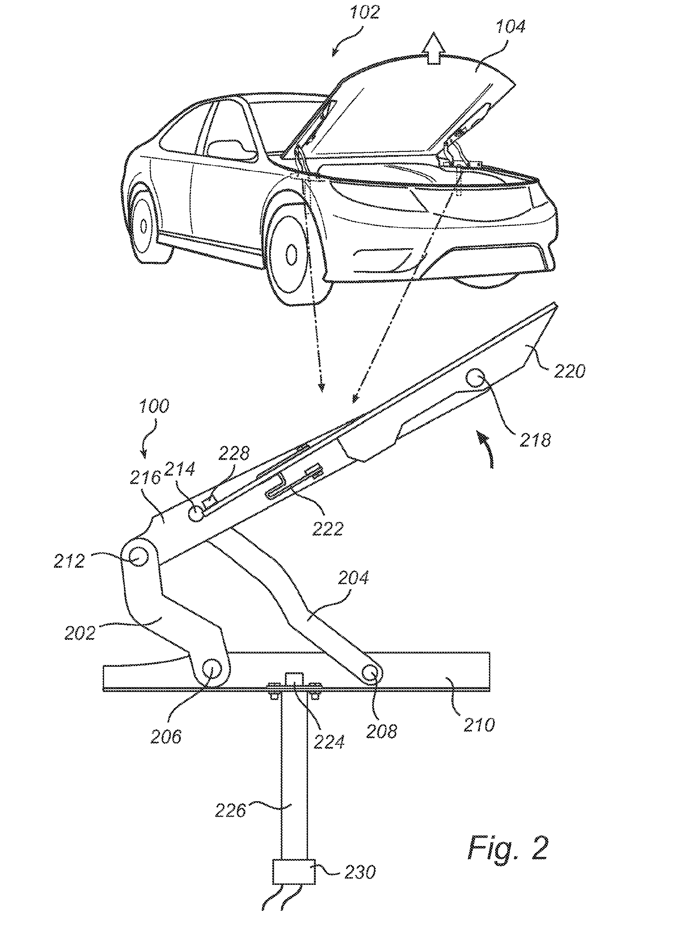

Fig. 2 schematically illustrates the hood hinge assembly 100 in a vehicle 102 where the hood 104 of the vehicle is opened in the front during a normal mode of operation.

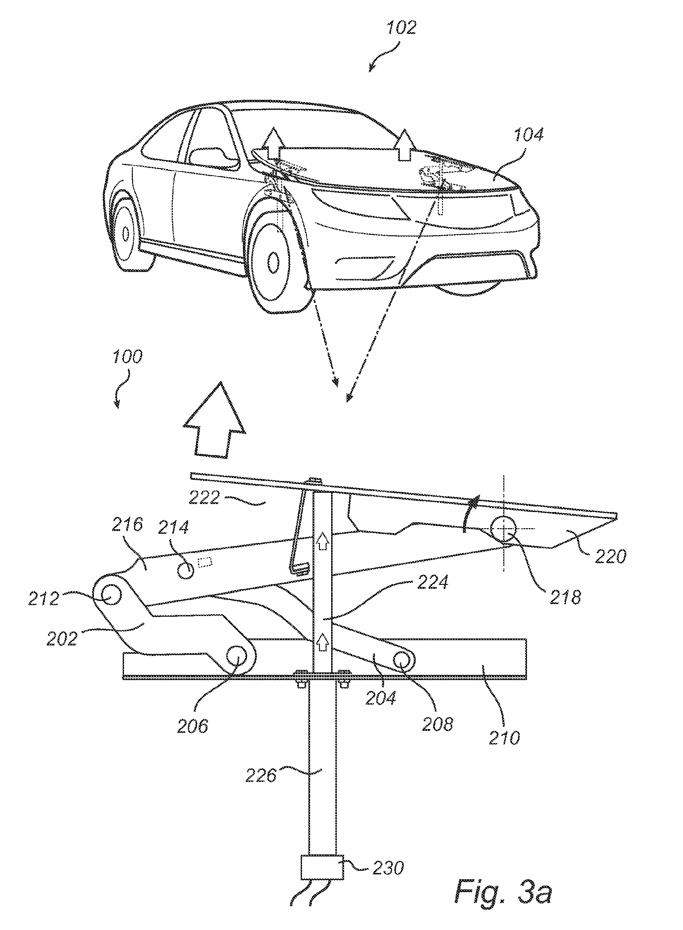

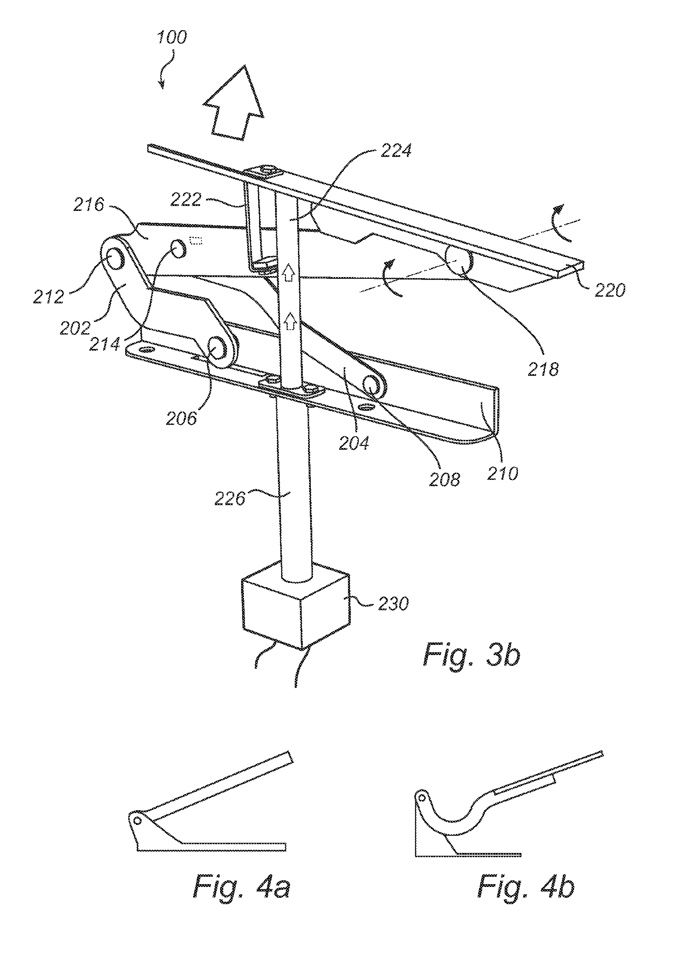

Figs. 3a and 3b schematically illustrates the hood hinge assembly 100 in a vehicle 102 in a first mode when a rearward portion of the hood 104 is partially raised in the case of activation where the pyrotechnic unit 230 arranged at the lower end of a tube 226 has been triggered and the hood 104 has been lifted by the piston 224 which is pressed up by the pressure build up inside the tube 226 by gas heated by the pyrotechnic reaction.

The details of an exemplary hood hinge assembly for a vehicle will now be described mainly with reference to the schematic illustration shown in Fig. 2 outlining the general elements of the hood hinge assembly.

The hood hinge assembly shown in Fig. 2 comprises a hinge linkage mechanism adapted to link a hood 104 of a vehicle 102 to a body of a vehicle 102, while permitting movement of the hood 104 in a first direction between an open and a closed position as seen in relation to the body of the vehicle.

The hinge linkage mechanism comprise at least two elongate levers 202, 204, wherein each lever is adapted to be in a first end operatively and hingely connected 206, 208 to the body of a vehicle. In the illustrated example the levers 202, 204 are connected to an intermediate element 210 which in turn is connected to the body of the vehicle. However the intermediate element 210 may equally well be an integrated part of the body of the vehicle and the element 210 will henceforth be treated as part of the body of the vehicle. Consequently, the elongate levers 202, 204 may equally well be directly connected to the body of the vehicle through one or more intermediate elements fixed to the body of the vehicle. A second end of each of the levers 202, 204 is hingely connected 212, 214 to a holding arm 216 also included in the hinge linkage mechanism. The holding arm is in turn is hingely connected 218 to a link element 220.

The link element 220 is arranged between the hood 104 and the hinge linkage mechanism. The link element 220 may alternatively be an integrated part of the hood 104. The hood hinge assembly further comprises a damping element 222 which is arranged between the link element 220 and the holding arm 216. The damping element can be attached to the link element 220 and the holding arm 216 by for example a rivet or a bolt connection. Here, the damping element 222 is a metal profile shaped as a partially folded band.

The damping element 222 is further configured to maintain the link element 220 in a fixed position in relation to the hinge linkage mechanism during normal operation of the hood, i.e. when the hood 104 is opened in a forward facing direction as illustrated in Fig. 2. Alternatively, or in combination, a holding element 228 is further arranged on the holding arm 216. The holding element 228 is arranged so as to hold the link element 220 in place in relation to the holding arm 216 during normal operation of the hood 104 as illustrated in Fig. 2.

The damping element 222 is further configured to permit movement of the hood in a second direction in the case of a collision, wherein the movement in the second direction is limited in velocity and extension by the damping element. This second direction is schematically illustrated in Fig. 3 where the rearward facing portion of the hood is opened.

The hood hinge assembly further comprises a pyrotechnic unit 230 connected to a piston 224 arranged in a cylinder 226, and the piston 224 is configured to eject, thereby rapidly opening the hood 104 in a second direction as illustrated in Fig. 3, in the case of a collision with a pedestrian or a similar object detected by a sensor system. As the piston 224 acts with a force on the link element 220, the holding element 228 is released at a predetermined load from the link element 220. The holding element 228 may be released for example by unlocking of a latch or shearing or tearing of the holding element 228. When the holding element 228 has been released, the force from the piston 224, acting on the link element 220, is now absorbed by the damping element 222. The force which is applied on the damping element 222 needs to be sufficiently large in order to extend the damping element 222 from an original idle position to an extended end position where further opening of the hood 104 is hindered.

As illustrated in Figs. 3a and 3b, the hinge linkage mechanism is also at least partially opened in the forward facing direction in combination with the aforementioned opening of the link element 220 in the rearward facing direction. This is the case as the hood 104 of the vehicle is jointly connected to the body of a vehicle by a locking mechanism (not shown) at the front of the vehicle. Thereby a certain degree of opening of the hinge linkage mechanism is desirable to allow for a rotational movement of the hood with the rotation point being the locking mechanism at the front of the vehicle in the case where the hood is opened in the rearward facing direction. The locking mechanism between the hood 104 and vehicle located at the front of the vehicle, together with the hood hinge assembly 100, thereby controls the angle of the hood.

As an example, the rearward facing portion of the hood may be lifted more than 120 mm in less than 30 ms. The damping element 222 should also be placed so that the force applied on the damping element 222, and the resulting force applied on the parts to which the damping element 222 is attached, are not too large so as to risk damaging the surrounding parts. During the rapid lift, the damping element 222 both limits the velocity and extension of the lifting motion, thereby protecting the hood 104 and hood hinge assembly 100 from damage. As a result, after an event where the hood 104 has been lifted without sustaining any secondary damage from for example the impact of other objects, it is often sufficient to exchange only the damping element 222 and the holding element 228, thereby saving time and cost by avoiding extensive repairs.

A collision sensor is connected to the pyrotechnic unit 230 in order to detect a collision of a type where the hood 104, for safety reasons, is required to open in the aforementioned manner. The decision and activation signal to lift the hood 104 is preferably managed and controlled by an electronic control module that can use contact sensor technology in the bumper, camera vision or radar based pedestrian recognition systems for making the decision if the hood 104 is to be lifted. Such a system requires time to analyze sensor signals to avoid faulty triggering decisions from non pedestrian objects until an adequate triggering signal can be achieved. This required sensor time reduces, to a minimum, the available lifting time for the hood hinge assembly to be fully lifted prior to an eventual head impact at the hood 104.

Figs. 4a and 4b schematically illustrates exemplary embodiments of a hinge linkage mechanism for opening the hood of a vehicle in a normal mode of operation. The damping element according to embodiments of the present invention could readily be used together with said hinge linkage mechanisms to form a hood hinge assembly according to embodiments of the present invention. In the hinge linkage mechanism illustrated in Fig. 4a the additional elements forming the hood hinge assembly may be located close to the joint, while in the mechanism illustrated in Fig. 4b has a gooseneck shaped portion between the joint and the additional elements.

The person skilled in the art realizes that the present invention by no means is limited to the preferred embodiments described above. On the contrary, many modifications and variations are possible within the scope of the appended claims. For example, the hinge linkage mechanism may be configured in many different ways to achieve the described function of opening the hood in a normal mode of operation while being integrated in a hood hinge assembly according to the present invention.

## Claims

1. A vehicle hood hinge assembly (100), comprising:
a hinge linkage mechanism adapted to fasten a hood (104) of a vehicle (102) to a body of a vehicle (102) while permitting movement of the hood (104) in a first direction between an open and a closed position as seen in relation to the body of the vehicle, the vehicle hood hinge assembly further comprising:
a link element (220) adapted to be arranged between the hood (104) and the hinge linkage mechanism; and
a damping element (222) arranged between the hinge linkage mechanism and the link element (220), said damping element (222) being configured to maintain the link element (220) in a fixed position in relation to the hinge linkage mechanism during normal operation of the hood (104), and further configured to permit movement of the hood (104) in a second direction in the case of a collision with a pedestrian or similar object detected by a sensor system, wherein said movement in the second direction is limited by said damping element (222).

2. Vehicle hood hinge assembly (100) according to claim 1, wherein said link element (220) is hingely connected (218) to the hinge linkage mechanism.

3. Vehicle hood hinge assembly (100) according to claim 1 or 2, further comprising a holding element (228) operative to prevent the link element (220) from moving relative the hinge linkage mechanism during normal operation such as opening and closing of the hood (104).

4. Vehicle hood hinge assembly (100) according to any one of the preceding claims, wherein said hinge linkage mechanism comprises at least two elongate levers (202, 204), wherein each lever is adapted to be in a first end operatively and hingely connected (206, 208) to the body (210) of a vehicle and wherein a second end of each lever is hingely connected (212, 214) to a holding arm (216) which in turn is hingely connected (218) to the link element (220).

5. Vehicle hood hinge assembly (100) according to claim 4, wherein said link element (220) is hingely connected (218) to an end portion of the holding (216) arm arranged to face a forward direction of the vehicle (102).

6. Vehicle hood hinge assembly (100) according to any one of claims 3 to 5, wherein said damping element (222) is arranged between the link element (220) and the holding arm (216).

7. Vehicle hood hinge assembly (100) according to any one of the preceding claims, wherein said damping element (222) is a metal profile.

8. Vehicle hood hinge assembly (100) according to claim 7, wherein said metal profile is folded band.

9. Vehicle hood hinge assembly (100) according to claim 8, wherein said folded band is at least partly meandering.

10. Vehicle hood hinge assembly (100) according to any one of claims 1 to 6, wherein said damping element is a spring.

11. Vehicle hood hinge assembly (100) according to any one of the preceding claims, further comprising a pyrotechnic unit (230) connected to a piston (224) configured to open the hood in the second direction in case of a collision.

12. Vehicle hood hinge assembly (100) according to claim 11, further comprising a collision sensor for triggering said pyrotechnic unit (230).

13. Motor vehicle (102) comprising a vehicle hood hinge assembly (100) according to any one of the preceding claims.
